# EUROPÄISCHE PATENTSCHRIFT

(11) **EP 0 382 040 B1**
(45) Veröffentlichungstag und Bekanntmachung des Hinweises auf die Patenterteilung: **19.01.1994**
(21) Anmeldenummer: 90101736.8
(22) Anmeldetag: 29.01.1990
(51) Int. Cl.: F16K 11/02

(54) **Sanitäres Mischventil**
Sanitary mixing valve
Soupape de mélange sanitaire

(30) Priorität: 10.02.1989 DE 3903999
(43) Veröffentlichungstag der Anmeldung: 16.08.1990
(73) Patentinhaber: FRIEDRICH GROHE AKTIENGESELLSCHAFT, D-58675 Hemer (DE)
(72) Erfinder: Pawelzik, Manfred, D-4770 Soest (DE); Titze, Horst, D-5800 Hagen (DE)

(56) Entgegenhaltungen:
- AT-B- 381 156
- DE-A- 3 428 286
- DE-A- 3 503 793
- US-A- 3 920 043

## Beschreibung

Die Erfindung betrifft ein sanitäres Mischventil mit den im Oberbegriff des Anspruchs 1 angegebenen Merkmalen.
Mischventile dieser Art sind bekannt (DE-A-35 03 793).
Bei diesen Mischventilen wird es häufig als Nachteil empfunden, daß aufgrund der quer zueinander verschiebbaren Ventilscheiben das Gehäuse zur Aufnahme der Ventilorgane relativ breit und gedrungen ausgebildet werden muß, wobei gerade dieser Teil des Mischventils meist im Sichtbereich des Benutzers liegt. Eine ansprechende Gestaltung des Armaturengehäuses, die häufig in einem schlanken Design des Mischventils gesehen wird, ist somit nur schwer zu realisieren.

Der Erfindung liegt die Aufgabe zugrunde, das eingangs aufgeführte Mischventil zu verbessern und insbesondere so zu gestalten, daß der Durchmesser des Mischventils verringert werden kann unter Beibehaltung der guten Durchflußleistung und eines Schwenkwinkels von über 90° zur Einstellung des Mischungsverhältnisses.

Diese Aufgabe wird erfindungsgemäß durch die Merkmale des Anspruchs 1 gelöst.
Weitere Ausgestaltungen der Erfindung sind in den Ansprüchen 2 bis 5 angegeben.

Die mit der Erfindung erzielbaren Vorteile bestehen insbesondere darin, daß durch die besondere Ausbildung des Überströmkanals die Wassereinlaß- und Wasserauslaßöffnungen in der Ventilsitzscheibe erheblich näher zueinander angeordnet werden können, wobei die üblichen Parameter bei den bekannten Mischventilen:
- maximale Durchflußleistung Q > 20 l/min. bei einem Druck p von 3 bar mit nachgeschaltetem Widerstand
- Schwenkwinkel zur Einstellung des Mischungsverhältnisses > 90°
- Scheibenüberdeckung (Ventilsitzscheibe mit Steuerscheibe) ≧ 1 mm
- Armaturengruppe I (günstiges Fließgeräuschverhalten)
- geringe Bedienkräfte (kleine Scheibenkontaktfläche)
eingehalten werden können. Durch die erfindungsgemäße Gestaltung der Öffnung im Steuerbereich bzw. der Steuerkante des Überströmkanals, d.h. die vordere Kante und die seitlichen Kanten entsprechen etwa der Kontur einer Ellipse, kann der Durchmesser des Mischventilgehäuses auf etwa 37 mm verringert werden. Die erfindungsgemäße Form des Überströmkanals wirkt sich sowohl mit einer Ventilsitzscheibe (statische Scheibe) ohne Mittenversatz und mit Mittenversatz günstig auf die Durchmesserreduzierung aus. Unter Mittenversatz ist hierbei die Strecke zu verstehen, um die der Mittelpunkt des inneren Kreisbogens der Einlaßöffnungen auf der Symmetrieachse in Richtung auf die gegenüberliegende Hälfte der Ventilsitzscheibe verschoben angeordnet ist.

Ein Ausführungsbeispiel der Erfindung ist in der Zeichnung dargestellt und wird im folgenden näher beschrieben. Es zeigt
- Figur 1: ein Mischventil im Längsschnitt im Maßstab von etwa 2 : 1, wie es als Baueinheit in Sanitärarmaturen einsetzbar ist;
- Figur 2: das Mischventil gemäß Figur 1 in der Schnittebene II in vergrößerter Darstellung;
- Figur 3: das Mischventil gemäß Figur 1 in der Schnittebene III in vergrößerter Darstellung;
- Figur 4: die Ventilscheibenpaarung (Ventilsitzscheibe, Steuerscheibe) in geschlossener Stellung;
- Figur 5: die Ventilscheibenpaarung gemäß Figur 4 in voll geöffneter Stellung, wobei die Einlaßöffnungen für Kalt- und Warmwasser mit gleichem Querschnitt geöffnet sind;
- Figur 6: die Ventilscheibenanordnung nach Figur 5, wobei eine Einlaßöffnung voll geöffnet ist, während die zweite Einlaßöffnung abgesperrt ist.

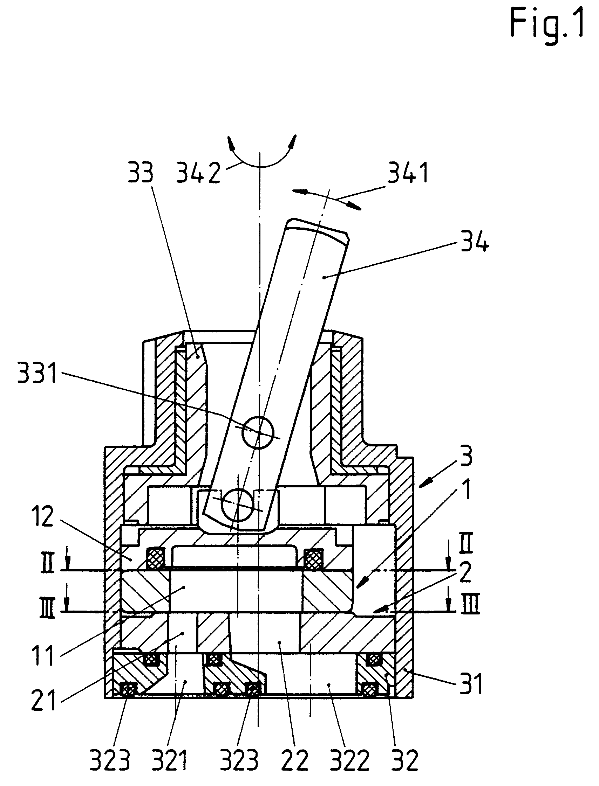

Das in der Figur 1 gezeigte Mischventil ist etwa im Maßstab 2:1 dargestellt, wobei das Mischventil als Baueinheit gekapselt angeordnet ist, die in das Gehäuse einer sanitären Wasserarmatur oder Eingriffmischbatterie eingesetzt und dort mit den Kalt- und Warmwassereinlässen sowie dem Mischwasserauslaß verbunden werden kann.
Die Kapselung des Mischventils erfolgt mit einem Ventilgehäuse 3, welches aus einer Mantelhülse 31 und einem Bodenstück 32 gebildet wird. In dem Bodenstück 32 sind separat angeordnete Zulauföffnungen 321 für Kalt-und Warmwasser sowie eine Ablauföffnung 322 für Mischwasser vorgesehen. Außerdem sind im Bodenstück 32 Dichtringe 323 zum dichten Anschluß an die Armatur etc. angeordnet.
An der dem Bodenstück 32 gegenüberliegenden Seite ist in der Mantelhülse 31 eine Drehhülse 33 mit einem um eine Schwenkachse 331 verschwenkbar gehalterten Stellhebel 34 angeordnet. Zwischen dem Bodenstück 32 und der Drehhülse 33 ist eine im wesentlichen ortsfest im Ventilgehäuse 3 gehalterte Ventilsitzscheibe 2 angeordnet, die Einlaßöffnungen 21 für das kalte und warme Wasser sowie eine Auslaßöffnung 22 für das Mischwasser aufweist, wobei diese Öffnungen mit den Zulauföffnungen 321 und der Ablauföffnung 322 im Bodenstück 32 verbunden sind. An der Ventilsitzscheibe 2 ist eine Steuerscheibe 1 formschlüssig mit einer Abdeckhaube 12 verschiebbar angelagert, wobei die Abdeckhaube 12 sich andererseits an der Drehhülse 33 axial abstützt. Die Steuerscheibe 1 weist dabei einen Überströmkanal 11 auf, mit dem die Einlaßöffnungen 21 mit der Auslaßöffnung 22 mehr oder weniger in Überdeckung gebracht werden können. Die beiden Scheiben, Steuerscheibe 1 und Ventilsitzscheibe 2, sind aus keramischem Material hergestellt und sind an den Oberflächen, mit denen sie aneinanderliegen, feinstbearbeitet, so daß eine wasserdichte Anlage gewährleistet ist. Die Steuerscheibe 1 ist über die Abdeckhaube 12 mit dem Stellhebel 34 formschlüssig verbunden, so daß bei einer Schwenkbewegung in Richtung der Pfeile 341 die Steuerscheibe 1 radial zur Ventilsitzscheibe 2 bewegt wird und somit die Gesamtdurchflußmenge einstellbar ist, während bei einer Drehbewegung in Richtung der Pfeile 342 mit dem Stellhebel 34 die Steuerscheibe 31 zur Ventilsitzscheibe 2 verdreht wird und hierdurch das Mischungsverhältnis von Kalt- und Warmwasser eingestellt werden kann.

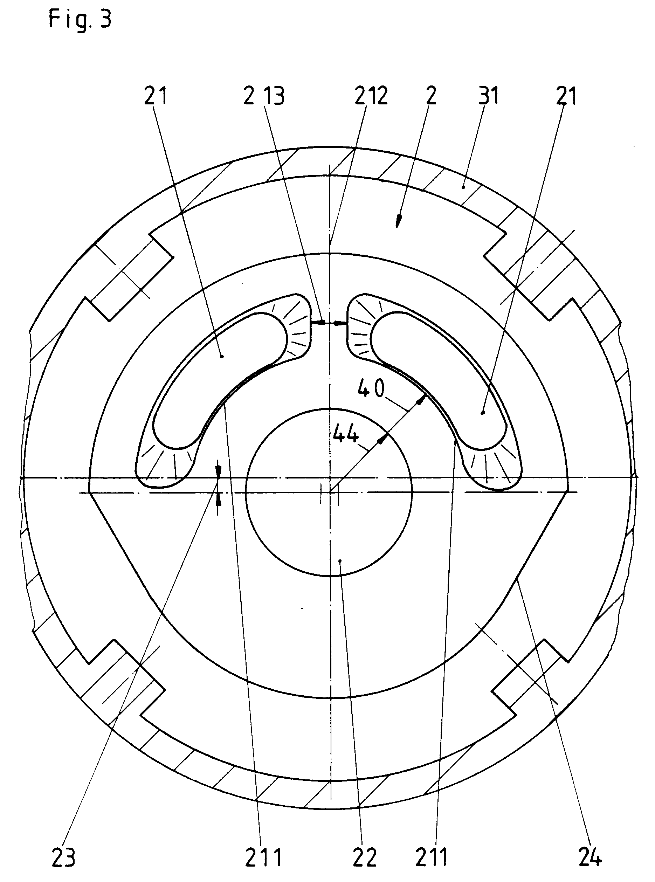

In Figur 3 ist die Ventilsitzscheibe 2 in vergrößerter Darstellung in Draufsicht gezeigt. Die Ventilsitzscheibe 2 ist dabei drehfest in der Mantelhülse 31 angeordnet, wobei sie eine etwa kreisförmige äußere Mantelfläche aufweist. Um eine Strecke 23 von etwa 0,8 mm ist auf einer Symmetrieachse 212 eine kreisförmige Auslaßöffnung 22 angeordnet. Konzentrisch zum Mittelpunkt der Auslaßöffnung 22 ist auf einem inneren Kreisbogen 211 mit einem Radius 40 zu beiden Seiten der Symmetrieachse 212 jeweils eine Einlaßöffnung 21 für das Kaltwasser und eine Einlaßöffnung 21 für das Warmwasser ausgebildet. Die Einlaßöffnungen 21 sind in der Ventilsitzscheibe 2 leicht konisch in Fließrichtung erweitert ausgebildet (Fig. 3) und befinden sich in der einen Hälfte der Ventilsitzscheibe, während die Auslaßöffnung 22 mit einem wesentlichen Teil auf der gegenüberliegenden Hälfte der Ventilsitzscheibe 2 angeordnet ist. Außerdem sind die Einlaßöffnungen 21 vom Bereich der Symmetrieachse 212 beginnend, stetig verjüngt oder verengt ausgebildet. Die Verengung auf der Bogenstrecke beträgt etwa 0,5 mm. Der Radius 40 des inneren Kreisbogens 211 beträgt etwa 7,5 mm, während der Radius 44 der Auslaßöffnung 22 etwa 4 mm beträgt. Der geringste Abstand 213 der Einlaßöffnungen 21 zueinander beträgt etwa 2 mm, wobei die Einlaßöffnungen 21 je eine parallele Seitenwand zur Symmetrieachse 212 aufweisen, die in den Ecken mit einem Radius von 1 mm verrundet sind. Die maximale Breite der Einlaßöffnungen 21 beträgt etwa 3,5 mm. Außerdem ist die Anlagefläche 24 für die Steuerscheibe 1 gegenüber der Gesamtkreisfläche der Ventilsitzscheibe 2 soweit verringert, daß eine Abdichtung an den verbleibenden Flächen gewährleistet ist.

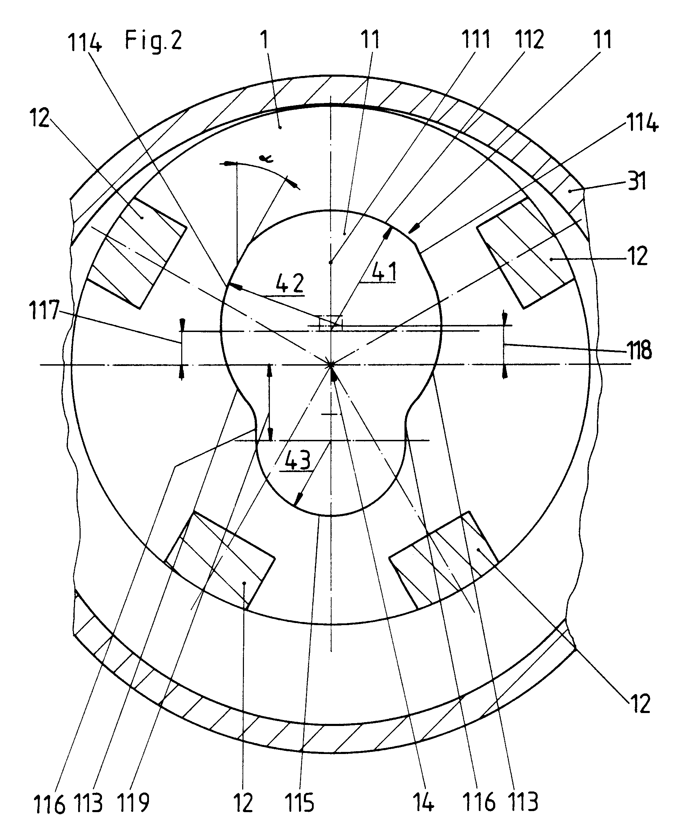

In Figur 2 ist die Steuerscheibe 1 in vergrößerter Darstellung in Draufsicht gezeigt. Der Überströmkanal 11 ist hierbei als glatter Durchbruch in der Keramikscheibe ausgebildet und wird an der von der Ventilsitzscheibe 2 abgekehrten Stirnseite mit der Abdeckhaube 12 verschlossen. Die Steuerscheibe 1 weist ebenfalls eine kreisrunde Form auf, wobei der Durchmesser der Scheibe gegenüber der Ventilsitzscheibe 2 um den Betrag der erforderlichen radialen Verschiebung zur Ventilsitzscheibe verringert ist. In bezug auf den Mittelpunkt 14 ist der Überströmkanal 11 ellipsenförmig ausgebildet, wobei die Hauptachse 111 der Ellipsenform die radiale Verschiebungsachse der Steuerscheibe 1 bildet. Ein Hauptscheitel der Ellipsenform wird hierbei von einem Kreisbogen 112 gebildet, dessen Mittelpunkt auf der Hauptachse 111 um eine Strecke 117 von etwa 1,8 mm in Richtung auf die Einlaßöffnungen 21 verschoben angeordnet ist, wobei der Radius 41 etwa 6,5 mm aufweist. Die beiden Nebenscheitel des Überströmkanals 11 werden dabei von Kreisbögen 113 gebildet, deren Mittelpunkte um die Strecke 118 von etwa 2,1 mm in Richtung auf die Einlaßöffnungen 21 verschoben angeordnet sind, wobei der Radius 42 ebenfalls jeweils 6,5 mm beträgt.
Der ellipsenförmige Überströmkanal 11, der mit den Einlaßöffnungen 21 zusammenwirkt, wird von Kreisbögen 112, 113 begrenzt, wobei die Kreisbögen 113 der Nebenscheitel mittels Geraden 114, die als Tangenten mit einem Winkel α von etwa 25° gegen die Hauptachse 111 geneigt angeordnet sind, mit dem Kreisbogen 112 verbunden sind.
Im Bereich des der Auslaßöffnung 22 zugekehrten Hauptscheitels ist eine halbkreisförmige Erweiterung 115 mit einem Radius 43 von etwa 4 mm ausgebildet, wobei der Mittelpunkt der Erweiterung 115 um etwa eine Strecke 119 von 4 mm von der Mittelachse 14, abgekehrt von den Einlaßöffnungen 21, entfernt angeordnet ist. Der Übergang von der halbkreisförmigen Erweiterung in die Kreisbögen 113 erfolgt mittels jeweils einer parallel zur Hauptachse 111 angeordneten Geraden 116, die mit einer leichten Verrundung in den Kreisbogen 113 jeweils übergeführt ist.

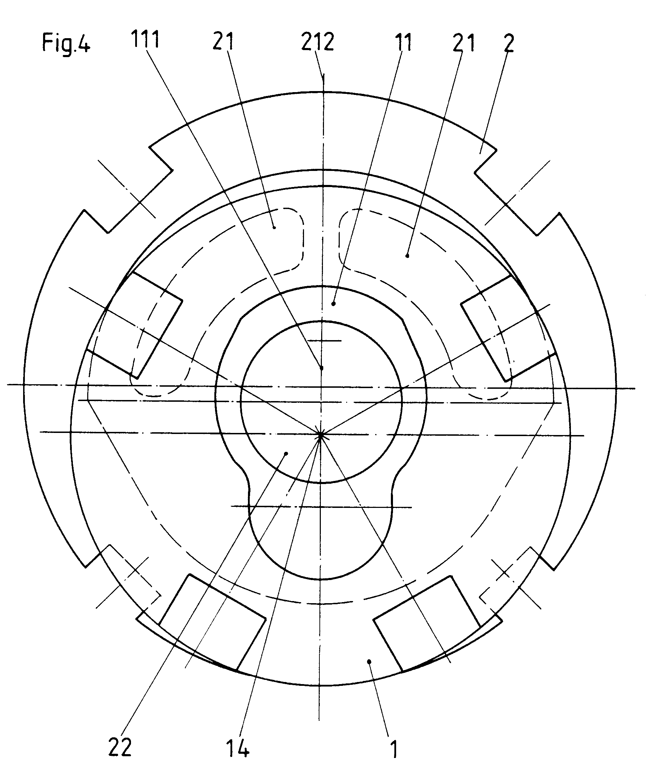

In den Figuren 4 bis 6 ist die Ventilsitzscheibe 2 zusammen mit der Steuerscheibe 1 in verschiedenen Stellungen zueinander gezeigt.
In Figur 4 ist die Steuerscheibe 1 zur Ventilsitzscheibe 2 in Schließstellung angeordnet. Die Symmetrieachse 212 deckt sich hierbei mit der Hauptachse 111 des Überströmkanals. Ein Durchfluß von Kalt- oder Warmwasser ist in dieser Stellung unterbunden.

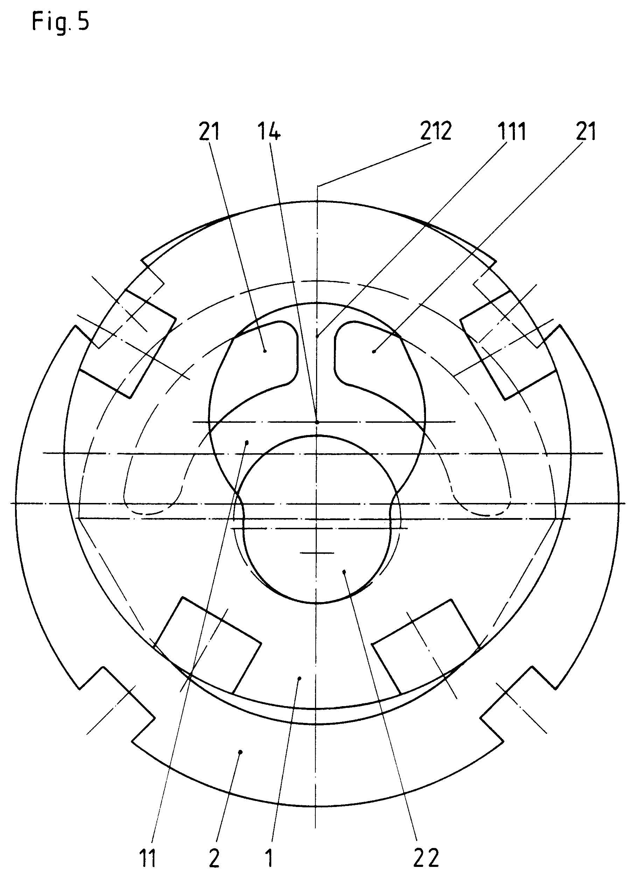

In Figur 5 ist die Steuerscheibe 1 zu der Ventilsitzscheibe 2 in eine vollgeöffnete Position gebracht. Auch in dieser Stellung befindet sich die Hauptachse 111 des Überströmkanals 11 deckungsgleich mit der Symmetrieachse 212 der Ventilsitzscheibe 2. In dieser Position ist somit jede der beiden Einlaßöffnungen 21 zu einem gleichen Teil geöffnet, so daß sich Kalt- und Warmwasser zu gleichen Teilen im Überströmkanal 11 mischen und das temperierte Mischwasser durch die Erweiterung 115 in die Auslaßöffnung 22 strömt und von hier dem Armaturenauslaß zugeführt wird.

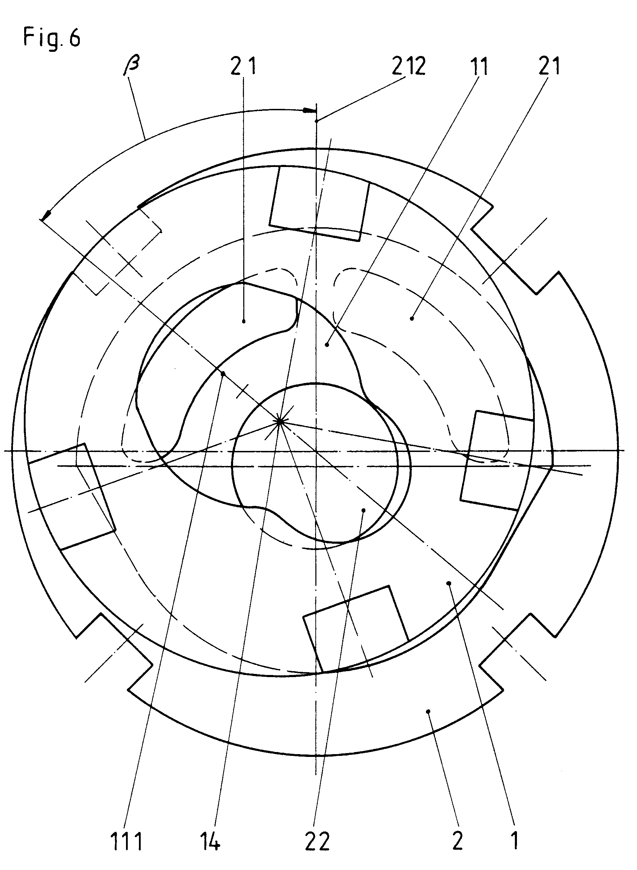

In Figur 6 ist die Anordnung der Steuerscheibe 1 zu der Ventilsitzscheibe 2 im Hinblick auf die Darstellung in Figur 5 um einen Schwenkwinkel β von etwa 50° dargestellt. In dieser Stellung ist lediglich eine Einlaßöffnung 21 vollgeöffnet, während die andere Einlaßöffnung 21 verschlossen ist. Es ist ersichtlich, daß somit durch einen Gesamtschwenkwinkel von 100° (2β) der Überströmkanal 11 der Steuerscheibe 1 von der in der Figur 6 gezeigten Stellung einer ersten Einlaßöffnung zu einer zweiten Einlaßöffnung 21 verschwenkt werden kann, so daß in diesen Endstellungen jeweils entweder nur warmes oder nur kaltes Wasser gezapft werden kann. In den wahlweise einstellbaren Zwischenstellungen kann entsprechend Kalt- und Warmwasser in den Überströmkanal 11 einströmen, so daß dann entsprechend temperiertes Mischwasser über die Auslaßöffnung 22 abgegeben wird. Wird dagegen die Steuerscheibe 1 in Richtung der Hauptachse 111 verschoben, so wird entsprechend die Gesamtdurchflußmenge des Wassers geändert.

## Patentansprüche

1. Sanitäres Mischventil, bestehend aus einem etwa zylindrischen Ventilgehäuse (3), einer Ventilsitzscheibe (2), die je eine Einlaßöffnung (21) für Kaltwasser und Warm-wasser und eine Auslaßöffnung (22) für Mischwasser aufweist, wobei die Einlaßöffnungen (21) symmetrisch in einer Hälfte der Ventilsitzscheibe (2) als Ringstücke auf einem Kreisbogen mit Abstand zur Mittelachse angeordnet sind, einer Steuerscheibe (1), die auf der Ventilsitzscheibe (2) verstellbar mit Hilfe eines Stellhebels (34), der im Ventilgehäuse (3) dreh- und kippbar gehaltert ist, angeordnet und mit einem der Mischung und/oder der Umlenkung dienenden Überströmkanal (11) versehen ist, derart, daß eine oder beide Einlaßöffnungen (21) mit der Auslaßöffnung (22) in Überlappung bringbar sind, wobei durch eine Drehung der Steuerscheibe (1) das Mischungsverhältnis, durch ein radiales Verschieben der Steuerscheibe (1) die Auslaufmenge einstellbar ist, und der Überströmkanal (11) wenigstens teilweise an der der Ventilsitzscheibe (2) zugekehrten Seite etwa ellipsenförmig gestaltet ist, derart, daß ein mit den Einlaßöffnungen (21) zusammenwirkender Scheitel der Ellipsenform angenahert einem Kreisbogen entspricht, dessen Mittelpunkt mit dem Mittelpunkt des inneren Kreisbogens (211) der Einlaßöffnungen (21) etwa zusammenfällt, wenn die Symmetrieachse (212) zu den Einlaßöffnungen (21) der Ventilsitzscheibe (2) sich mit der Verschiebeachse des Überströmkanals (11) deckt und das Mischventil sich in Schließstellung befindet, dadurch gekennzeichnet, daß die Hauptachse (111) der Ellipsenform die radiale Verschiebungsachse der Steuerscheibe (1) bildet und ein Hauptscheitel mit den Einlaßöffnungen (22) zusammenwirkt, wobei
- der ellipsenförmige Überströmkanal (11) im Bereich der beiden Nebenscheitel und des Hauptscheitels von Kreisbögen (112,113) begrenzt ist, wobei die Kreisbögen (113) der Nebenscheitel mittels Geraden (114), die als Tangenten mit einem Winkel (α) von etwa 25° gegen die Hauptachse (111) geneigt sind, mit dem Kreisbogen (112) des Hauptscheitels verbunden sind,
- an dem von den Einlaßöffnungen (21) abgekehrten Hauptscheitel des Überströmkanals (11) etwa der Mittelpunkt einer halbkreisförmigen Erweiterung (115) vorgesehen ist, deren Durchmesser etwa dem der Auslaßöffnung (22) entspricht oder geringfügig kleiner ausgebildet ist, wobei der Halbkreisbogen mit parallel angeordneten Geraden (116) mit den Kreisbögen (113) der Nebenscheitel verbunden ist.

2. Mischventil nach Anspruch 1, dadurch gekennzeichnet, daß der Mittelpunkt des inneren Kreisbogens (211) der Einlaßöffnungen (21) vom Mittelpunkt der Ventilsitzscheibe (2) auf der Symmetrieachse (212) in Richtung auf die gegenüberliegende Hälfte um eine Strecke (23) verschoben angeordnet ist.

3. Mischventil nach Anspruch 1 oder 2, dadurch gekennzeichnet, daß die Einlaßöffnungen (21) im Bereich der Symmetrieachse (212) beginnend stetig verjüngt, beispielsweise um 0,5 mm auf der Ringstrecke, ausgebildet sind und konzentrisch zu den inneren Kreisbögen (211) der Einlaßöffnungen (21) die Auslaßöffnung (22) vorgesehen ist.

4. Mischventil nach wenigstens einem der Ansprüche 1 bis 3, dadurch gekennzeichnet, daß der Radius (40) des inneren Kreisbogens (211) der Einlaßöffnungen (21) etwa 7,5 mm beträgt und der Überströmkanal (11) eine maximale Breite im Bereich der Nebenscheitel von etwa 11,8 mm aufweist, wobei, ausgehend von der Mittelachse (14) der Steuerscheibe (1), der Mittelpunkt des Kreisbogens (112) am Hauptscheitel um eine Strecke (117) von etwa 1,8 mm zu den Einlaßöffnungen (21) verschoben angeordnet ist und der Radius (41) 6,5 mm aufweist, die Mittelpunkte der Kreisbögen (113) der Nebenscheitel um eine Strecke (118) von 2,1 mm zu den Einlaßöffnungen (21) verschoben angeordnet sind und die Radien (42) jeweils 6,5 mm betragen, während im Bereich des von den Zulauföffnungen (21) abgekehrten Hauptscheitels der Mittelpunkt der halbkreisförmigen Erweiterung (115) um eine Strecke (119) von etwa 4 mm von den Einlaßöffnungen (21) entfernt angeordnet ist und der Radius (43) 4 mm beträgt.

5. Mischventil nach Anspruch 2, dadurch gekennzeichnet, daß die Strecke (23) etwa 0,8 mm beträgt.

## Claims

1. Sanitary mixing valve, consisting of an approximately cylindrical valve housing (3), of a valve seat disc (2) which has an inlet opening (21) for cold water and another for hot water and an outlet opening (22) for mixed water, the inlet openings (21) being arranged symmetrically in one half of the valve seat disc (2) as ring sections on an arc of a circle at a distance from the central axis, of a control disc (1) which is arranged on the valve seat disc (2) so as to be adjustable by means of an adjusting lever (34) rotatably and tiltably retained in the valve housing (3) and is provided with a flow-over channel (11) serving for mixing and/or diversion, such that one or both inlet openings (21) can be brought to overlap the outlet opening (22), the mixing ratio being adjustable by means of rotation of the control disc (1), and the outflow amount by means of radial displacement of the control disc (1), and the flow-over channel (11) being at least partially somewhat elliptical in shape on the side facing towards the valve seat disc (2), such that a vertex of the elliptical shape, cooperating with the inlet openings (21), corresponds approximately to an arc the centre point of which coincides approximately with the centre point of the inner arc (211) of the inlet openings (21), when the axis of symmetry (212) of the inlet openings (21) of the valve seat disc (2) coincides with the axis of displacement of the flow-over channel (11) and the mixing valve is in the closed position, characterised in that the major axis (111) of the elliptical shape forms the radial axis of displacement of the control disc (1) and a major vertex co-operates with the inlet openings (22), wherein
- the elliptical flow-over channel (11) is bounded in the region of the two minor vertices and of the major vertex by arcs of a circle (112, 113), the arcs (113) of the minor vertices being connected to the arc (112) of the major vertex by means of straight lines (114) which are inclined as tangents at an angle (α) of approximately 25° to the major axis (111),
- at the major vertex, remote from the inlet openings (21), of the flow-over channel (11), approximately the centre point of a semi-circular widening (115) is provided, the diameter of which corresponds approximately to that of the outlet opening (22) or is slightly smaller, the semi-circular arc being connected by parallel straight lines (116) to the arcs (113) of the minor vertices.

2. Mixing valve according to Claim 1, characterised in that the centre point of the inner arc (211) of the inlet openings (21) is offset from the centre point of the valve seat disc (2) on the axis of symmetry (212) in the direction of the opposite half by a distance (23).

3. Mixing valve according to Claim 1 or 2, characterised in that the inlet openings (21), beginning in the region of the axis of symmetry (212), taper constantly, for example by 0.5 mm on the arc length, and the outlet opening (22) is provided concentric with the inner arc (211) of the inlet openings (21).

4. Mixing valve according to at least one of Claims 1 to 3, characterised in that the radius (40) of the inner arc (211) of the inlet openings (21) is approximately 7.5 mm and the flow-over channel (11) has a maximum width in the region of the minor vertices of approximately 11.8 mm, and, starting from the central axis (14) of the control disc (1), the centre point of the arc (112), on the major vertex, is offset by a distance (117) of approximately 1.8 mm to the inlet openings (21) and has a radius (41) of 6.5 mm, the centre points of the arcs (113) of the minor vertices are offset by a distance (118) of 2.1 mm to the inlet openings (21) and the radii (42) are each 6.5 mm, while in the region of the major vertex remote from the infeed openings (21) the centre point of the semi-circular widening (115) is arranged at a distance (119) of approximately 4 mm from the inlet openings (21) and the radius (43) is 4 mm.

5. Mixing valve according to Claim 2, characterised in that the distance (23) is approximately 0.8 mm.

## Revendications

1. Mitigeur d'eau sanitaire composé d'un corps (3) sensiblement cylindrique, d'un disque formant siège de soupape (2) avec chaque fois un orifice d'entrée (21) pour l'eau froide et l'eau chaude et un orifice de sortie (22) pour l'eau mélangée, les orifices d'entrée (21) étant dans une position symétrique dans une moitié du disque formant siège de soupape (2) comme pièce annulaire, sur un arc de cercle, à une certaine distance de l'axe central, un disque de commande (1) qui est mobile sur le disque formant siège de soupape (2), à l'aide d'un levier de commande (34) monté en rotation et en pivotement dans le corps de mitigeur (3) et un canal de débordement (11) servant au mélange et/ou au contournement, de façon que l'un ou les deux orifices d'entrée (21) puissent être mis en chevauchement avec l'orifice de sortie (22), une rotation du disque de commande (1) réglant le rapport du mélange et un déplacement radial du disque de commande (1) réglant la quantité distribuée et le canal de débordement (11) ayant au moins en partie, sur le côté tourné vers le disque formant siège de soupape (2), une forme sensiblement elliptique, pour qu'un sommet de la forme elliptique coopérant avec les orifices d'entrée (21) corresponde sensiblement à un arc de cercle dont le centre coïncide avec le centre de l'arc de cercle intérieur (211) des ouvertures d'entrée (21) lorsque l'axe de symétrie (212) des ouvertures d'entrée (21) du disque formant siège de soupape (2) recouvre l'axe de déplacement du canal de débordement (11) et que le mitigeur est en position de fermeture, mitigeur caractérisé en ce que l'axe principal (111) de la forme d'ellipse constitue l'axe de déplacement radial du disque de commande (1) et un sommet principal coopère avec les orifices d'entrée (22),
- le canal de débordement (11) elliptique étant limité dans la zone des deux sommets auxiliaires et du sommet principal par des arcs de cercle (112, 113), les arcs de cercle (113) des sommets secondaires sont reliés au moyen des droites (114) à l'arc de cercle (112) du sommet principal qui sont inclinées comme tangentes avec un angle (α) environ de 25° par rapport à l'axe principal (111).
- le sommet principal opposé aux orifices d'entrée (21) du canal de débordement (11) se trouve sensiblement au centre de l'extension (115) en forme de demi-arc de cercle dont le diamètre correspond sensiblement à l'orifice de sortie (22) ou est légèrement plus petit, l'arc de cercle étant relié par des droites (116) parallèles, à l'arc de cercle (113) des sommets secondaires.

2. Mitigeur selon la revendication 1, caractérisé en ce que le centre de l'arc de cercle intérieur (211) des orifices d'entrée (21) est'décalé du centre du disque formant siège de soupape (2) sur l'axe de symétrie (212) en direction de la moitié opposée, d'une distance (23).

3. Mitigeur selon la revendication 1 ou 2, caractérisé en ce que les orifices d'entrée (21) vont en diminuant, en permanence, en commençant au niveau de l'axe de symétrie (212), par exemple de 0,5 mm sur le trajet annulaire, et concentriquement aux arcs de cercle intérieurs (211) des orifices d'entrée (21) se trouve l'orifice de sortie (22).

4. Mitigeur selon au moins l'une des revendications 1 à 3, caractérisé en ce que le rayon (40) de l'arc de cercle intérieur (211) des orifices d'entrée (21) correspond environ à 7,5 mm et le canal de débordement (11) a une largeur maximale, au niveau des sommets secondaires, environ de 11,8 mm, et partant de l'axe central (14) du dispositif de commande (1), le centre de l'arc de cercle (112) sur le sommet principal est décalé d'une distance (117) environ de 1,8 mm par rapport aux orifices d'entrée (21) et le rayon (41) correspond à 6,5 mm, le centre des arcs de cercle (113) des sommets secondaires étant décalé d'une distance (118) de 2,1 mm par rapport aux orifices d'entrée (21) et les rayons (42) représentent chaque fois 6,5 mm alors que dans la zone du sommet principal opposée aux orifices d'entrée (21), le centre de l'extension (115) en forme de demi-cercle est éloigné d'une distance (119) de l'ordre de 4 mm par rapport aux orifices d'entrée (21) et le rayon (43) est égal à 4 mm.

5. Mitigeur selon la revendication 2, caractérisé en ce que le chemin (23) représente environ 0,8 mm.
